# EUROPEAN PATENT APPLICATION

(11) **EP 4 716 170 A1**
(43) Date of publication of application: **25.03.2026**
(21) Application number: 25194443.5
(22) Date of filing: 06.08.2025
(51) Int. Cl.: H04L 41/142, H04L 41/147, H04L 41/5009, H04L 41/50, H04L 41/16

(54) **APPLICATION-AWARE NETWORK NEUTRALITY COMPLIANT DIFFERENTIATION**

(30) Priority: 24.09.2024 US 202463698056 P; 24.09.2024 US 202463698062 P
(71) Applicant: Cujo LLC, Covina, CA 91723 (US)
(72) Inventor: Olden, Magnus, 0349 Oslo (NO)
(74) Representative: Marks & Clerk LLP

(57) **Abstract**

Input data indicative of network conditions, application characteristics, and available differentiation options is received (102). For evaluated differentiation options, a statistical model generates (110) probabilistic predictions of an application performance outcome for a network-connected device requesting differentiation of network resources and other application performance outcomes for other network-connected devices sharing the network resources. Based on the probabilistic predictions, it is determined (118) whether any of the evaluated differentiation options increases a likelihood of meeting an application performance objective for the network-connected device without causing unacceptable degradation in the other application performance outcomes for the other network-connected devices in accordance with network neutrality principles. In response to determining (118), it is outputted (124) a recommendation to apply a selected differentiation option for the network-connected device or to deny the differentiation for the network-connected device.

## Description

### FIELD

The invention relates to a method, apparatus, computer program, and computer-readable medium.

### BACKGROUND

In modern communication networks, maintaining a high quality of user experience while ensuring efficient and fair use of network resources presents a persistent challenge. As network traffic becomes increasingly diverse and dynamic, traditional approaches to managing quality of service often fall short in addressing the complex interplay between user demands, network conditions, and service differentiation. Emerging technologies, such as Quality on Demand (QoD) interfaces, allow user equipment to request differentiated treatment. However, these mechanisms typically lack the contextual awareness needed to evaluate the broader implications of such requests. Furthermore, network operators face increasing regulatory pressure to ensure that any differentiation of traffic remains transparent, proportionate, and non-discriminatory in accordance with network neutrality principles. Further sophistication for the determination of the network neutrality compliant differentiation is desirable.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1A and FIG. 1B are flowcharts illustrating examples of a method;
FIG. 2 is a block diagram illustrating example implementation environments for the method;
FIG. 3A and FIG. 3B are block diagrams illustrating examples of a cybersecurity apparatus;
FIG. 4 is a block diagram illustrating an example of a network-connected device;
FIG. 5 is a block diagram illustrating an example of a networked computing resource; and
FIG. 6A and FIG. 6B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The described method is about helping network-connected devices like phones, routers, or other connected equipment make smarter decisions when asking for better network treatment, like faster speeds or lower delays, without messing things up for everyone else on the same network. It uses a statistical computer model that looks at current network conditions and predicts how different options might affect the performance of applications, both for the network-connected device making the request and for other network-connected devices nearby. Based on those predictions, the system decides whether to allow the request or not, making sure the decision is fair, reasonable, and follows the rules of network neutrality-meaning no one gets unfair priority. The system may run on the network-connected device itself or on a nearby customer-premises equipment, and it may also generate reports to show regulators that everything was done by the book.

For example, in a residential broadband network, a user's video conferencing application may request low-latency treatment. The system evaluates whether granting this request would degrade the performance of other users in the same Wi-Fi or Digital Subscriber Line (DSL) segment, and only allows it if the predicted impact is within acceptable bounds.

Advantages of the method may comprise one or more of the following: improved fairness in network resource allocation, transparent and auditable differentiation decisions, compliance with network neutrality regulations, real-time, device-local decision-making, and sector-wide impact modeling using probabilistic methods.

As used herein, the term "differentiation" refers to the allocation or adjustment of network resources-such as bandwidth, latency, or priority levels-based on specific criteria, such as application type, device characteristics, or service level agreements. Differentiation may involve applying one or more quality-of-service (QoS) levels or prioritization schemes to certain data flows or devices, with the goal of improving application performance for selected network traffic. In the context of this disclosure, differentiation is considered within the framework of network neutrality compliance, meaning that any such adjustments are transparent, proportionate, and non-discriminatory with respect to other users and services sharing the same network resources. In the described method, the differentiation may be initiated by a network-connected device or by a customer-premises equipment, and may be evaluated using a statistical model that estimates the impact on both the requesting network-connected device and other network-connected devices within the same network segment or sector.

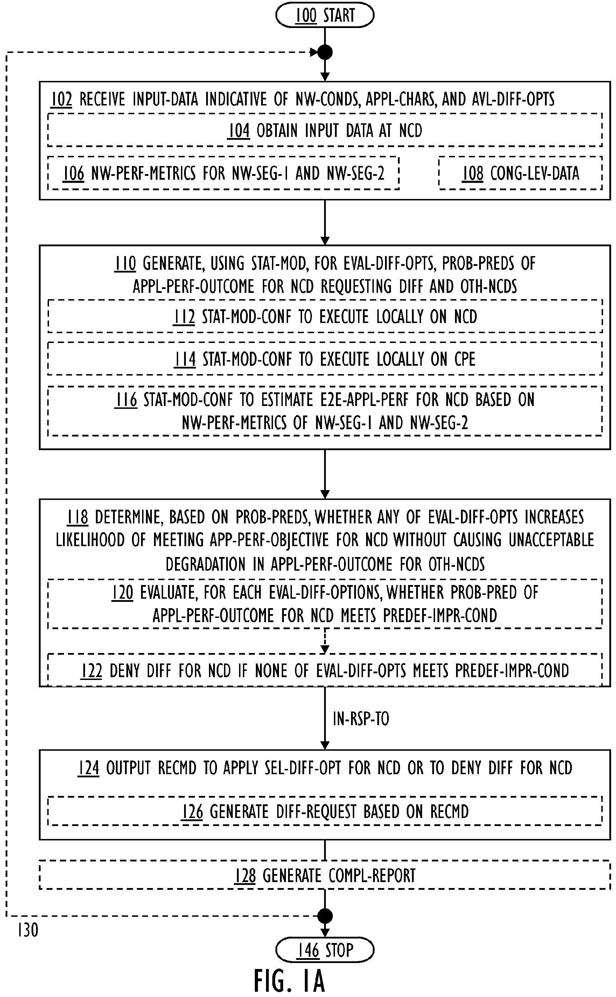

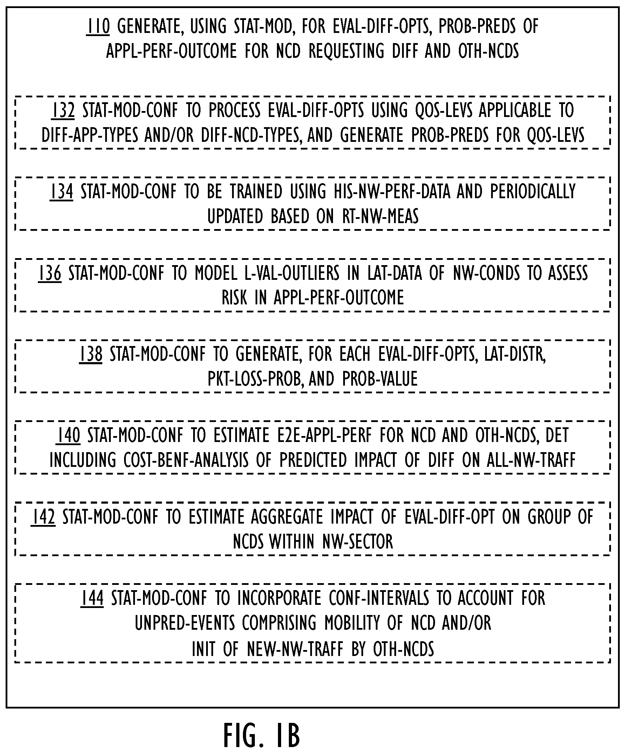

FIG. 1A and FIG. 1B are flowcharts illustrating examples of a computer-implemented method. The method performs operations related to determining an application-aware network neutrality compliant differentiation. The method starts in 100 and ends in 146. The method may run in principle endlessly. The infinite running may be achieved by looping 130 back.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations. As illustrated in FIG. 1A, the method begins at operation 100 and proceeds through operations such as receiving input data 102, generating predictions 110, determining differentiation impact 118, and outputting a recommendation 124.

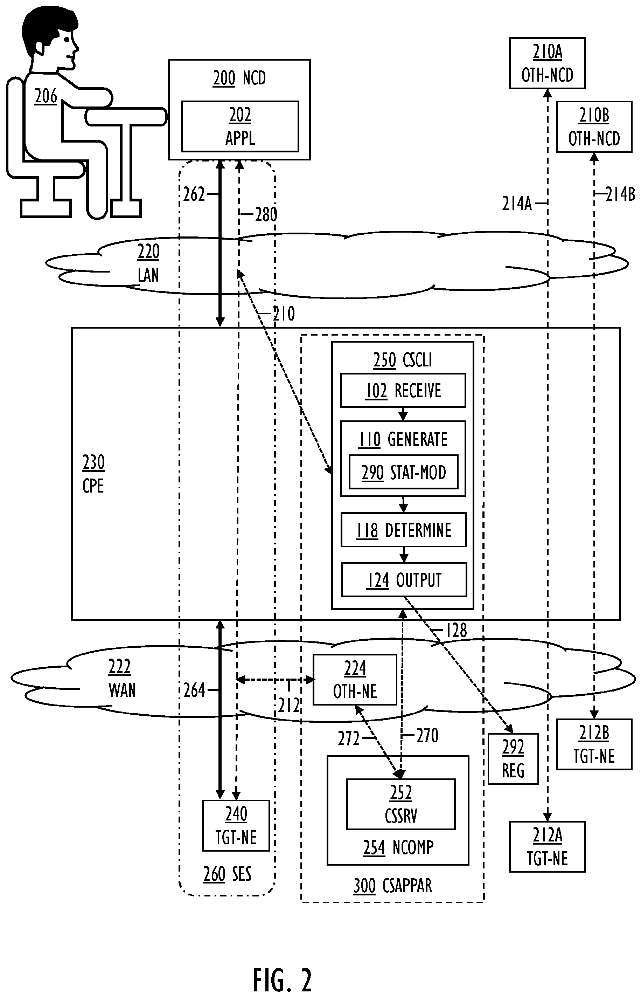

FIG. 2 is a block diagram illustrating example implementation environments for the computer-implemented method in the form of a system architecture. The described method is executed within a cybersecurity apparatus 300, which may be deployed in various configurations to support flexible and efficient processing. In some examples, the cybersecurity apparatus 300 comprises a cybersecurity client 250 operating on the customer-premises equipment 230, and/or a cybersecurity server 252 operating on a networked computing resource 254, such as a cloud platform. With recent advancements in edge computing and AI-enabled network devices, it is feasible for the method to be executed locally on the customer-premises equipment 230. This allows for a low-latency, privacy-preserving analysis of network issues directly at the customer site. Alternatively, or additionally, the method may be executed remotely in the networked computing resource 254 to leverage greater computational resources for more complex tasks. This hybrid deployment model enables the method to efficiently diagnose and resolve operational problems. In an example, the customer-premises equipment 230 monitors 210 the network traffic 280 on a local area network (LAN) 220 of the customer-premises equipment 230. Additionally, another network element 224 may monitor 212 the network traffic 280 on a wide area network (WAN) 222.

Input data indicative of one or more network conditions, one or more application characteristics, and one or more available differentiation options is received 102. The one or more network conditions may comprise signal strength, latency, jitter, packet loss, and congestion levels 108 measured across both the local area network (LAN) 220 and the wide area network (WAN) 222. The one or more application characteristics may be inferred from traffic behavior or explicitly signaled by an application 202 running on a network-connected device 200. The one or more available differentiation options may be obtained through Quality on Demand (QoD) Application Programming Interfaces (APIs), which allow the network-connected device 200 to query the network for supported service levels-such as low-latency or high-throughput modes-without directly applying them. These APIs expose the network's capability to offer differentiated treatment, but do not themselves predict the outcome or fairness of such differentiation.

For one or more evaluated differentiation options of the one or more available differentiation options, it is generated 110, using a statistical model 290, one or more probabilistic predictions of an application performance outcome for the network-connected device 200 requesting a differentiation of network resources and one or more other application performance outcomes for one or more other network-connected devices 210A, 210B sharing the same network resources.

The statistical model 290 may be executed locally on the network-connected device 112, on the customer-premises equipment 230, or on a networked computing resource 254. The statistical model 290 is configured to use real-time and historical data to estimate the likelihood that a given application 202 will meet its performance objectives-such as low latency for video conferencing or low packet loss for gaming-under each differentiation scenario.

The statistical model 290 may be implemented using one or more artificial intelligence (AI) or machine learning (ML) techniques, such as supervised learning, probabilistic graphical models, or ensemble methods. In some examples, the statistical model 290 may be trained using labeled datasets comprising historical network performance metrics and application outcomes, and may be periodically retrained or fine-tuned using real-time measurements to adapt to changing network conditions. The statistical model 290 may be implemented using standard ML frameworks and executed on embedded processors, edge computing platforms, or cloud-based infrastructure, depending on the deployment scenario. The use of AI/ML enables the statistical model 290 to capture complex, nonlinear relationships between network conditions and application performance, and to generalize across diverse network environments and device types. Alternatively, the statistical model 290 may be implemented using deterministic or rule-based logic, or classical statistical methods such as Bayesian inference or queuing theory, particularly in scenarios where training data is limited or where predictable network behavior allows for analytical modeling.

The one or more available differentiation options may refer to one or more potential configurations of network resource allocation-such as bandwidth, latency, or priority levels-that are technically supported by the network and evaluated by the statistical model 290 to determine their impact on application performance outcomes. These options may be exposed via Quality on Demand (QoD) APIs or other network interfaces and are assessed to ensure compliance with network neutrality principles.

As used herein, the term "evaluated differentiation options" refers to one or more differentiation options of the one or more available differentiation options that are assessed by the statistical model 290. These options may be evaluated based on one or more application characteristics, one or more network conditions, and one or more service-level objectives. The options are subject to probabilistic analysis to determine their predicted impact on application performance and compliance with network neutrality principles.

The one or more application performance objectives may refer to a predefined threshold or target level of performance for a given application 202, such as maximum allowable latency, minimum throughput, or acceptable packet loss, which determines whether the application 202 is considered to be functioning optimally. These objectives may be derived from the one or more application characteristics and are used by the statistical model 290 to evaluate whether a differentiation option provides a meaningful improvement in user experience.

As shown in FIG. 2, the one or more network conditions may relate to network traffic 280 between the network-connected device 200 and a target network element 240. The one or more network conditions may also relate to network traffic 214A, 214B between the one or more other network-connected devices 210A, 210B and other target network elements 212A, 212B. The shared network resources may relate to the customer-premises equipment 230, its local area network 220, and possibly also to a part of a wide area network 222 that is network-topographically near the customer-premises equipment 230. The one or more network conditions may comprise latency, jitter, packet loss, congestion levels, and signal strength, and may be obtained via active measurements, passive monitoring, or network APIs such as Connectivity Insight. As used herein, Connectivity Insight refers to a network-level data source or API that provides real-time or historical metrics-such as congestion levels across different quality-of-service configurations-at the sector or segment level, enabling probabilistic modeling of application performance outcomes under varying network conditions

The one or more application characteristics may describe the performance requirements and behavioral traits of a software application operating on the network-connected device 200. These may comprise latency sensitivity, bandwidth demand, tolerance to packet loss, and expected traffic patterns. For example, video conferencing applications typically require low latency and minimal jitter, while streaming applications may tolerate buffering. The one or more application characteristics may be inferred from traffic behavior, explicitly signaled by the application, or derived from historical usage data. They are used by the system to evaluate whether a differentiation request aligns with the service level objectives of the application.

Based on the one or more probabilistic predictions, it is determined 118 whether any of the evaluated differentiation options increases a likelihood of meeting an application performance objective for the network-connected device 200 without causing unacceptable degradation in the one or more other application performance outcomes for the one or more other network-connected devices 210A, 210B, in accordance with network neutrality principles. This determination 118 may comprise a cost-benefit analysis that weighs the expected improvement for the requesting network-connected device 200 against the potential negative impact on the other network-connected devices 210A, 210B. The analysis ensures that differentiation is only applied when it is proportionate, transparent, and non-discriminatory.

In response to determining 118, it is outputted 124 a recommendation to apply a selected differentiation option for the network-connected device 200 or to deny the differentiation of the network resources for the network-connected device 200. This recommendation may be executed by the customer-premises equipment 230, the cybersecurity client 250, or the networked cybersecurity server 252. The decision logic ensures that differentiation is applied only when justified by predicted outcomes and regulatory compliance, and may optionally be logged or reported for audit purposes. The recommendation may refer to a non-binding output generated by the system based on the determination of predicted application performance outcomes. The recommendation may be acted upon by a downstream entity, such as the customer-premises equipment 230, the network-connected device 200, or a network operator, but it does not mandate execution. In some implementations, the recommendation may be treated as an instruction if the recipient is configured to automatically follow it. Thus, the term encompasses both advisory and optionally enforceable outputs, depending on the deployment context and policy configuration. The user 206 of the network-connected device 200 may be provided with the recommendation to accept or reject the recommended differentiation option. The customer-premises equipment 230 may also automatically or semi-automatically accept or reject the recommended differentiation option. The recommended differentiation option may also be transmitted to an operations support system (OSS, not illustrated in FIG. 2) of the network operator (such as the Internet service provider), which may then either authorize or reject it. The operations support system refers to a network management and analytics platform configured to provide inputs to and receive outputs from the cybersecurity apparatus 300.

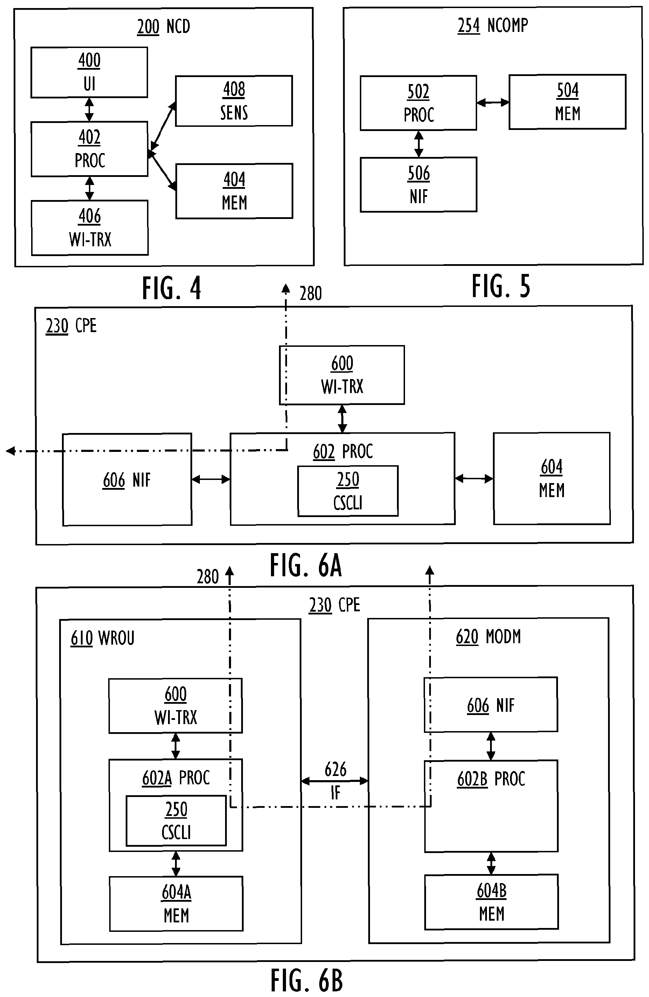

In an example, it is specified that the input data is obtained at the network-connected device 200, and that the statistical model 290 is configured to execute locally on the network-connected device 200, with a differentiation request being generated 126 based on the recommendation. The network-connected device 200 may be a smartphone, tablet, or IoT sensor, for example, as shown in FIG. 4. The network performance data such as signal strength, latency, and congestion is collected locally and used to evaluate differentiation options. The application 202 running on the network-connected device 200 may initiate the request based on the output of the statistical model 290.

In an example, it is specified that the input data indicative of the one or more network conditions comprises network performance metrics 106 for a first network segment 220 between the network-connected device 200 and the customer-premises equipment 230, and a second network segment 222 between the customer-premises equipment 230 and a target network element 240, and that the statistical model 290 is configured to execute locally on the customer-premises equipment 230 and to estimate end-to-end application performance for the network-connected device 200 based on the network performance metrics. The customer-premises equipment 230 may be implemented as shown in FIG. 6A or FIG. 6B. This configuration allows the statistical model 290 to assess both local and upstream network conditions.

In an example, it is specified that the input data indicative of the one or more network conditions comprises congestion level data 108. This congestion level data 108 may be obtained via the Connectivity Insight API or inferred from packet delay and queue metrics. Congestion levels are critical for predicting the impact of differentiation, especially in shared environments like Wi-Fi or cellular sectors.

FIG. 1B expands on the internal logic of the statistical model 290 with various examples.

In an example, it is specified that the statistical model 290 is configured 132 to process the evaluated differentiation options using a plurality of quality-of-service levels applicable to different application types and different network-connected device types, and to generate the probabilistic predictions for the plurality of quality-of-service levels. For example, video conferencing may require low latency, while streaming may tolerate buffering. The statistical model 290 may be configured to evaluate how each QoS level affects performance for each traffic type and device class. This enables fine-grained differentiation.

In an example, it is specified that the statistical model 290 is configured 134 to be trained using historical network performance data and periodically updated based on real-time network measurements. Historical data may comprise logs of latency, throughput, and packet loss, while real-time updates ensure responsiveness to current conditions. This adaptive learning improves prediction accuracy.

In an example, it is specified that the statistical model 290 is configured 136 to model large-value outliers in latency data of the one or more network conditions to assess a risk in the application performance outcome. These outliers, such as sudden spikes in delay, may disrupt real-time applications (causing performance degradation). By modeling the tail of the latency distribution, the system may better anticipate and mitigate performance risks.

In an example, it is specified that the statistical model 290 is configured 138 to generate, for each of the evaluated differentiation options, a latency distribution, a corresponding packet loss probability, and a probability value. These outputs form a statistical profile of expected network behavior, enabling informed decisions about whether differentiation will meaningfully improve performance.

In an example, the statistical model 290 may output numerical probabilities for application success at different quality levels. For example, video conferencing may show a 55% success rate at default quality level and 85% at a higher quality level, while online gaming may improve from 43% to 69%, illustrating the ability of the statistical model 290 to quantify expected performance gains.

In an example, it is specified that the statistical model 290 is configured 140 to estimate an end-to-end application performance for the network-connected device 200 and for the one or more other network-connected devices 210A, 210B, and that the determining 118 comprises a cost-benefit analysis of the predicted impact of differentiation on all affected network traffic. This ensures that differentiation benefits the requesting network-connected device 200 without disproportionately harming the other network-connected devices 210A, 210B, supporting fairness and efficiency.

In an example, the method may comprise rule-based logic to prevent ineffective or unfair differentiation. Such rules may comprise avoiding differentiation when no reasonable improvement is expected, and denying differentiation if it would cause disproportionate degradation to the other network-connected devices 210A, 210B within the same sector.

In an example, it is specified that the statistical model 290 is configured 142 to estimate an aggregate impact of an evaluated differentiation option on a group of network-connected devices 200, 210A, 210B within a network sector. For example, in a Wi-Fi or cellular sector, the statistical model 290 may simulate how prioritizing one flow affects overall sector performance, helping avoid congestion collapse or unfair degradation. The aggregate impact may refer to the cumulative effect of an evaluated differentiation option on the application performance outcomes of multiple network-connected devices 210A, 210B within a shared network segment or sector. As used herein, the term "network segment" or "network sector" refers to a portion of the communication network that shares common network resources and may be affected by differentiation decisions. This may comprise, for example, the local area network 220 of the customer-premises equipment 230, and/or a portion of the access network infrastructure of the Internet service provider (ISP) that connects multiple customer-premises equipment 230 to the wider Internet 222, such as a Wi-Fi coverage area, a cellular radio sector, or a shared backhaul link.

In an example, it is specified that the statistical model 290 is configured 144 to incorporate confidence intervals to account for unpredictable events comprising one or more of a mobility of the network-connected device 200, and an initiation of new network traffic by the one or more other network-connected devices 210A, 210B. This accounts for uncertainties such as roaming between access points or sudden traffic bursts, improving robustness of predictions. The confidence interval may refer to a statistical range that quantifies the uncertainty in the predicted application performance outcomes, accounting for unpredictable events such as device mobility or the initiation of new traffic flows.

In an example, is specified that determining 118 comprises evaluating, for each evaluate differentiation option, whether the corresponding probabilistic prediction of the application performance outcome for the network-connected device 200 meets a predefined improvement condition 120, and denying the differentiation for the network-connected device 200 if none of the one or more evaluated differentiation options meets the predefined improvement condition 122. This prevents ineffective differentiation and ensures resources are allocated only when justified. The predefined improvement condition may refer to a criterion or threshold that must be met or exceeded by the predicted application performance outcome in order for a differentiation option to be considered beneficial and justifiable.

In an example, it is specified that a compliance report 128 is generated comprising, for each of the one or more evaluated differentiation options, a quantitative assessment of a predicted impact on the application performance outcome for the network-connected device 200 and on the one or more application performance outcomes for the one or more other network-connected devices 210A, 210B. The compliance report may comprise an indication of whether the predicted impact satisfies predefined criteria for transparency, proportionality, and non-discrimination in accordance with network neutrality principles. The compliance report may be configured to be transmitted to a network operator or a regulatory authority 292. This report supports auditability and regulatory compliance by providing a documented rationale for each differentiation decision.

In the example of FIG. 2, the network traffic 280 may be analyzed to detect one or more network links 262, 264 that form a network session 260. The network link 262, 264 refers to a physical or logical connection between two network nodes, and it is about connectivity and transmission characteristics (signal strength, bandwidth, and latency, for example). The network-connected device 200 may have a wireless network link (over Wi-Fi, for example) 262, or a wired network link (through Ethernet cable, for example) 262 to the customer-premises equipment 230. The customer-premises equipment 230 may have a wired network link 264 to the target network element 240. The network session 260 refers to a logical communication exchange between two endpoints (in our example between the network-connected device 200 and the target network element 240) over the network 220, 222, and it is about application-level interaction, which may span multiple links or hops. Examples of the network session 260 are a video call, a file download, or a cloud gaming session.

The network link information may characterize the connection 262 between the network-connected device 200 and the network 220. The network link information may comprise the network-connected device's 200 IP address, the MAC address (comprising the OUI portion to infer manufacturer), the type of network interface (Wi-Fi or Ethernet, for example), and the customer-premises equipment 230 through which the network-connected device 200 is connected. Additionally, the network link information may capture performance metrics such as latency, packet loss, and throughput, as well as capabilities like supported protocols (IPv6 and Transport Layer Security (TLS), for example), bandwidth capacity, and QoS configurations.

In an example, a network session 260 that comprises the one or more network links 262, 264 are analyzed. This enables the analysis of the network session 260. The network session 260 refers to a logical communication exchange, such as a video stream, file transfer, or cloud gaming session, between the network-connected device 200 and the remote target network element 240 over the Internet 222. This network session 260 is supported by one or more network links 262, 264, which are the physical or logical connections that carry the data. In FIG. 2, the network session 260 traverses the wireless link (WLAN) 262 between the network-connected device 200 and the local customer-premises equipment 230, and the wired network link (WAN) 264 between the customer-premises equipment 230 and the remote target network element 240.

By analyzing the network session 260 in the context of these underlying network links 262, 264, the method allows for a more complete understanding of how network conditions affect application performance. Optionally, the analysis of the network session 260 may comprise operations of detecting session-level 260 metrics, correlating them with link 262, 264 data, and deriving insights such as quality of experience scores or root cause indicators.

The application 202 executing on the network-connected device 200 may be a cybersecurity application performing an initial device registration in cooperation with a cybersecurity client 250 operating in the customer-premises equipment 230, optionally augmented by a cybersecurity server 252 operating in the networked computing resource 254 (such as a processing cloud).

The network traffic 280 refers to a flow of data packets across a network between the network-connected device 200 and the target network element, encompassing all types of data transmitted and received by devices connected to the network. This comprise data generated by applications, services, and protocols that facilitate communication between devices. Network traffic 280 may be categorized based on various criteria, such as the type of data being transmitted (e.g., video, audio, text), the source and destination of the data, and the protocols used for the transmission.

The network traffic 280 is typically measured in terms of bandwidth, which is the amount of data transmitted per unit of time, usually expressed in Megabits per second (Mbps). Key parameters that characterize the network traffic 280 also comprise a latency, a jitter, and a packet loss rate.

The network traffic 280 comprises a process of sending and receiving data packets between the network-connected device 200 and the customer-premises equipment 230. This transmission is governed by various networking standards, comprising Ethernet (IEEE 802.3) for wired connections and Wi-Fi^{®} (IEEE 802.11) for wireless connections. The network-connected device 200 may support various Wi-Fi^{®} standards, comprising, but not being limited to the IEEE^{®} 802.11a/b/g/n/ac/ax (Wi-Fi 6), Wi-Fi 6E and Wi-Fi 7. These standards determine the speed, range, and frequency bands (2.4 GHz, 5 GHz, and 6 GHz) for the network traffic 280.

As used herein, the term "network-connected device" 200 refers to a physical computing device with communication capabilities.

As used herein, the term "customer-premises equipment" 230 refers to a physical device providing the local area network 220 for the network-connected device 200 and an access for the network-connected device 200 to the Internet 222.

The network traffic 280 may be transferred over a wireless connection between the network-connected device 200 and the customer-premises equipment 230. Alternatively, the network traffic 280 may be transferred over a wired connection between the network-connected device 200 and the customer-premises equipment 230. The connection is first established between the network-connected device 200 and the customer-premises equipment 230. Next, the network traffic 280 may extend from the network-connected device 200 via the local area network 220 and the Internet 222 to the target network element 240. The establishment of the connection may also require a communication with the DNS proxy server.

In the network traffic 280, data packets may be transferred from and to the network-connected device 200. In an example, the customer-premises equipment 230 is configured to generate a wireless non-cellular internet access network 220. The customer-premises equipment 230 may be configured to operate at a site (such as a home or an office of a user 206 of the network-connected device 200, or a public place).

Next, let us study how a cybersecurity operator is capable of monitoring the network traffic 280 using the cybersecurity apparatus 300.

First, the network traffic between the network-connected device 200 and the customer-premises equipment 230 is monitored. The application 202, such as a web browser or an app running in the network-connected device 200 seeks to establish a connection to the target network element 240, for example. As shown in FIG. 2, the connection between the network-connected device 200 and the customer-premises equipment 230 is routed through an access of the Internet 222 to the target network element 240.

The network-connected device 200 is configured to execute the application 202, such as web user interface application (a web browser, for example), or a stand-alone application (a mobile app, for example), and as a result, the network traffic 280 from the network-connected device 200 to the target network element 240 via the local area network 220 and the Internet 222 is performed. The application 202 may automatically cause the network traffic 280, and/or, alternatively, the network traffic 280 may be generated as a result of an action by the user 206 through user interface controls of the application 202 and the network-connected device 200.

The network-connected device 200 may create the connection using a packet protocol from the application 202 of the network-connected device 200 to the target network element 240. The target network element 240 may comprise one or more servers hosting a server application enabling access by the application 202. Transmission Control Protocol/Internet Protocol (TCP/IP) is a packet protocol fundamental for internet communication. User Datagram Protocol (UDP) may also be used as a packet protocol as it offers lower latency by not requiring acknowledgment of packet receipt, making it suitable for real-time network traffic 280. QUIC is a packet protocol developed by Google^{®} that combines the low-latency benefits of UDP with improved reliability and security features, and is therefore increasingly used. Real-time Transport Protocol (RTP) is a packet protocol used for delivering audio and video over IP networks. Web Real-Time Communication (WebRTC) is a packet protocol that enables real-time communication over peer-to-peer connections. In the Internet Protocol suite, the network traffic 280 is operated in a link layer, an internet layer, and a transport layer, and the requests transmitted in the network traffic 280 are operated in an application layer.

As used herein, the term "monitoring" refers to user-approved lawful interception or monitoring of the network traffic 280 with a purpose and goal of increasing cybersecurity related to the network-connected device 200 and its operating environment. As the network traffic 280 is monitored, the network traffic 280 is accessed and collected between the transmitting device and the receiving device. The network traffic 280 may be monitored even if the digital data transmission units (such as messages or packets) of the network traffic 280 are addressed to the receiving device (such as the customer-premises equipment 230, or the target network element 240). The monitoring may be implemented so that the network traffic 280 is passively monitored, i.e., the network traffic 280 is not affected by the monitoring. Alternatively, if needed, the monitoring may comprise a seizing of the network traffic 280, i.e., the network traffic 280 is actively influenced so that a connection and/or requests and/or responses are blocked until it may be decided whether a cybersecurity action (such as blocking of the network traffic 280) is required.

As used herein, the term "network traffic" comprises the transmission and/or reception of (digital) data between the network-connected device 200 and the customer-premises equipment 230. The network traffic 280 is transferred using digital data transmission units over a communication medium such as one or more communication channels between the network-connected device 200 and another network node such as the customer-premises equipment 230 or the target network element 240. Besides over a radio interface or a wired interface in the local area network 220, the data may be conveyed over another transmission medium (implemented by copper wires, or optical fibers, for example) on the Internet 222. The data are a collection of discrete values that convey information, or sequences of symbols that may be interpreted, expressed as a digital bitstream or a digitized analog signal, comprising, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and comprise, but are not limited to: messages, protocol units, packets, and frames. One or more communication protocols may define a set of rules followed by the network-connected device 200 and other network nodes to implement the successful and reliable network traffic 280. The communication protocols may implement a protocol stack with different conceptual protocol layers.

The Internet 222 uses the Internet Protocol suite comprising TCP/IP and UDP/IP to globally connect computer networks so that communication is enabled between the network-connected devices 200 and various Internet services. The Internet 222 comprises public networks, private networks, academic networks, business networks, government networks, etc. interlinked with various networking technologies.

The network traffic 280 may be monitored by a cybersecurity client 250 operating in the customer-premises equipment 230. The network traffic 280 may be accessed and collected by the cybersecurity client 250. The cybersecurity client 250 may also access a data structure related to the network traffic 280 established and maintained at the customer-premises equipment 230 after a successful handshake sequence between the network-connected device 200 and the customer-premises equipment 230. The monitored network traffic 280 may be analyzed in order to perform an appropriate cybersecurity operation by the cybersecurity client 250, possibly augmented by a cybersecurity server 252 operating in a networked computing resource 254. Machine learning algorithms may use a number of other data items (such as device-specific unique radio interface characteristics, and other active and historic unique identifiers related to the network-connected device 200 and its communication) to enable the device identification.

The Internet 222 uses the Internet Protocol suite comprising TCP/IP and UDP/IP to globally connect computer networks so that communication is enabled between the network-connected devices 200 and various Internet services. The Internet 222 comprises public networks, private networks, academic networks, business networks, government networks, etc. interlinked with various networking technologies.

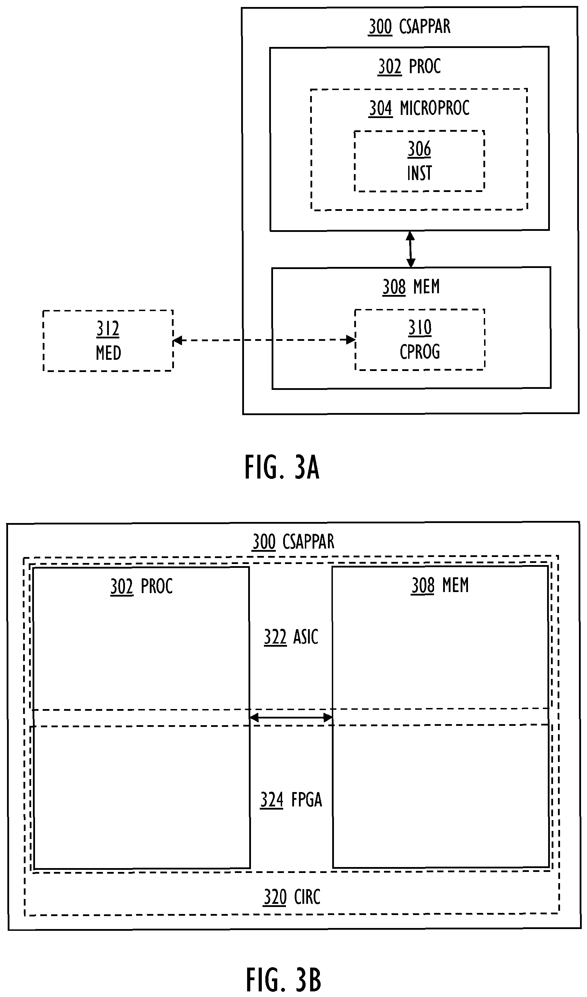

FIG. 3A and FIG. 3B are block diagrams illustrating examples of a cybersecurity apparatus 300. FIG. 3A shows a software-based implementation of the cybersecurity apparatus 300, while FIG. 3B shows a hardware-based implementation. The method described with reference to FIG. 1A, and FIG. 1B may be implemented by the cybersecurity apparatus 300. The apparatus 300 may execute the operations defined in the method. The apparatus 300 may implement an algorithm, which comprises the operations of the method, but may optionally comprise other operations related to the cybersecurity in general. Note that the method described with reference to FIG. 1A and FIG. 1B may be implemented as a part of the cybersecurity client 250 running in the customer-premises equipment 230 as shown in FIG. 2. As shown in FIG. 2, the cybersecurity apparatus 300 may comprise various distributed actors 250, 252 communicatively coupled 270 with each other.

The operations of the method may be implemented in connection with various other aspects of cybersecurity operations, such as a device identification, device intelligence, household intelligence, and application detection, for example.

The cybersecurity apparatus 300 comprises one or more memories 308, and one or more processors 302 coupled to the one or more memories 308 configured to execute the operations described in FIG. 1A, and FIG. 1B.

The term "processor" 302 refers to a device that is capable of processing data. The term "memory" 308 refers to a device that is capable of storing data run-time (= working memory) or permanently (= non-volatile memory).

As shown in FIG. 3A, the one or more processors 302 may be implemented as one or more microprocessors 304, which are configured to execute instructions 306 of a computer program 310 stored on the one or memories 308. The microprocessor 304 implements functions of a central processing unit (CPU) on an integrated circuit. The CPU is a logic machine executing the instructions 306 of the computer program 310. The CPU may comprise a set of registers, an arithmetic logic unit (ALU), and a control unit (CU). The control unit is controlled by a sequence of the instructions 306 transferred to the CPU from the (working) memory 308. The control unit may contain a number of microinstructions for basic operations. The implementation of the microinstructions may vary, depending on the CPU design. The one or more microprocessors 304 may be implemented as cores of a single processor and/or as separate processors. Note that the term "microprocessor" is considered as a general term comprising, but not being limited to a digital signal processor (DSP), a neural processing unit (NPU), a quantum processing unit (QPU), a digital signal controller, a graphics processing unit (GPU), a system on a chip, a microcontroller unit (MCU), a special-purpose computer chip, and other computing architectures employing at least partly microprocessor technology. The memory 308 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 310 may be written ("coded") by a suitable programming language, and the resulting executable code may be stored in the memory 308 and executed by the one or more microprocessors 304.

The computer program 310 implements the method/algorithm. The computer program 310 may be coded using a programming language, which may be a high-level programming language, such as C, C++, Python, Go, Rust, and P4, or with a low-level programming language, such as an assembler or a machine language. The computer program 310 may be in source code form, object code form, executable file, or in some intermediate form, but for use in the one or more microprocessors 304 it is in an executable form as an application. There are many ways to structure the computer program 310: the operations may be divided into modules, sub-routines, methods, classes, objects, applets, macros, etc., depending on the software design methodology and the programming language used. In modern programming environments, there are software libraries, i.e., compilations of ready-made functions, which may be utilized by the computer program 310 for performing a wide variety of standard operations. In addition, an operating system (such as a general-purpose operating system) may provide the computer program 310 with system services. A development environment may host various tools and frameworks, one example being GitHub^{®}.

As shown in FIG. 3A, a computer-readable medium 312 may store the computer program 310, which, when executed by the apparatus 300 (the computer program 310 may first be loaded into the one or more microprocessors 304 as the instructions 306 and then executed by one or more microprocessors 304), causes the apparatus 300 (or the one or more microprocessors 304) to carry out the method/algorithm. The computer-readable medium 312 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 310 to the one or memories 308 of the apparatus 300. In some jurisdictions, depending on the legislation and the patent practice, the computer-readable medium 312 may not be the wired or wireless telecommunications signal. The computer program 310 may be implemented as a computer program product comprising instructions which, when executed by the apparatus 300, cause the apparatus 300 to carry out the method.

As shown in FIG. 3B, the one or more processors 302 and the one or more memories 308 may be implemented by a circuitry 320. A non-exhaustive list of implementation techniques for the circuitry 320 comprise, but is not limited to application-specific integrated circuits (ASICs) 322, field-programmable gate arrays (FPGAs) 324, application-specific standard products (ASSPs), standard integrated circuits, logic components, and other electronics structures employing custom-made or standard electronic circuits.

Note that in modern computing environments a hybrid implementation employing both the microprocessor technology of FIG. 3A and the custom or standard circuitry of FIG. 3B is feasible.

Functionality of the apparatus 300, comprising the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

FIG. 4 is a block diagram illustrating an example of the network-connected device 200. The network-connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smart glasses, a game console, an Internet of Things (IoT) device such as a sensor or a camera, another kind of ubiquitous computing device (such as the smart television), or some other type of a wired or wireless mobile or stationary communication device operating with or without a subscriber identification module (SIM) or an embedded SIM (eSIM). The network-connected device 200 may be a personal communication device of the user 206.

As used herein, the term "network-connected device" 200 refers broadly to any electronic device capable of establishing communication with a network, either directly or indirectly, via wired or wireless means. This comprises, without limitation, the aforementioned user-operated devices, IoT devices, and smart devices with embedded processing and connectivity capabilities. Such network-connected devices 200 may function as client devices in distributed systems, endpoints in enterprise or cloud-based networks, or any other networked components capable of transmitting, receiving, monitoring, or processing data over public or private networks, comprising those connected through the customer-premises equipment 230. These network-connected devices 200 may also serve as points of interaction, data exchange, observation, control, or vulnerability within various operational contexts, such as cybersecurity, network analysis, and network optimization, and may generate or consume telemetry data, performance metrics, or control signals relevant to the monitoring, management, and optimization of network resources and system security.

The network-connected device 200 comprises one or more memories 404, and one or more processors 402 coupled to the one or more memories 404 configured to carry out a functionality of the network-connected device 200. In addition, the network-connected device 200 comprises a user interface 400, and one or more wireless transceivers 406 (such as a WLAN transceiver, a cellular radio network transceiver, and a short-range radio transceiver), and also one or more sensors 408.

FIG. 5 is a block diagram illustrating an example of a networked computing resource 254. As used herein, the term "networked computing resource" 254 refers to any computing infrastructure accessible over a network, comprising but not limited to cloud platforms, remote servers, edge computing nodes, or virtualized environments. In an example, the networked computing resource 254 may be implemented as a networked computer server that interoperates with the customer-premises equipment 230 according to a client-server architecture, a cloud computing architecture, a peer-to-peer system, or another applicable distributed computing architecture. As shown in FIG. 5, the networked computing resource 254 comprises one or more memories 504, and one or more processors 502 coupled to the one or more memories 504 and configured to carry out the functionality of the cybersecurity server 252. Additionally, the networked computing resource 254 comprises a network interface 506 (such as an Ethernet network interface card) configured to couple the networked computing resource 254 to a wide area network (WAN) 222 such as the Internet.

FIG. 6A and FIG. 6B are block diagrams illustrating examples of the customer-premises equipment (CPE) 230, which may be deployed in various types of sites, comprising residential homes, office environments, or other locations. FIG. 6A shows an integrated customer-premises equipment 230, while FIG. 6B shows a split configuration The customer-premises equipment 230 may serve users 206 of network-connected devices 200 at the specific site 204, such as within private premises-such as homes or offices-or in public settings, where it may function as a public access point or hotspot providing connectivity in venues like cafes, city centers, shopping malls, airports, arenas, and similar public areas.

The customer-premises equipment 230 is stationary equipment connected to a telecommunication circuit of a carrier such as the network service provider (NSP) offering internet access using broadband or fixed wireless technologies at a demarcation point. The demarcation point may be defined as a point at which the public Internet 222 ends and connects with the local area network 220 at the home or office. In this way, the customer-premises equipment 230 acts as a network bridge, and/or a router.

In an example, the customer-premises equipment 230 is an edge router. The edge router connects the internal local area network 220 to the Internet 222, and is positioned at the boundary of a network. The edge router may comprise a neural processing unit designed to accelerate machine learning and artificial intelligence tasks. With the increased processing power, the edge router processes data locally, reducing latency and improving performance. Processing data at the edge router enhances privacy and security by minimizing the amount of data sent over the Internet 222. The edge router plays a crucial role in managing network traffic by intercepting and analyzing data packets at the boundary of the network. The edge router ensures an efficient routing, prioritizes critical traffic, and implements security measures to protect the network. By monitoring network traffic 280, the edge router may detect anomalies, optimize performance, and maintain the quality of service for applications.

The customer-premises equipment 230 may comprise one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) local area network 220 and thus enabling user 206 of the network-connected device 200 to access communication services of the NSP, and the Internet 222. Note that the customer-premises equipment 230 may also be implemented with wireless technology, such as a 4G or 5G customer-premises equipment 230 configured to exchange a 5G cellular radio network signal with the Internet 222 accessible via a base station operated by the broadband service provider, and generate a Wi-Fi^{®} (or WLAN) or wired signal to implement the local area network 220 to provide access for the network-connected device 200. Furthermore, the 4G/5G customer-premises equipment 230 performs the conversion between the 4G/5G cellular radio network signal and the Wi-Fi^{®} or wired signal.

In FIG. 6A, the customer-premises equipment 230 is an integrated apparatus comprising one or more memories 604, and one or more processors 602 coupled to the one or more memories 604 configured to carry out a part of the method/algorithm in some examples. Additionally, the customer-premises equipment 230 comprises a wireless radio transceiver 600 configured to create the wireless local area network 220 for enabling access by the network-connected device 200. The customer-premises equipment 230 also comprises a network interface 606 to act as a modem configured to connect to the telecommunication circuit of the carrier at the demarcation point, i.e., to the Internet 222. The network interface 606 may operate as a Digital Subscriber Line (DSL) modem using different variants such as Very high bitrate DSL (VDSL), Symmetric DSL (SDSL), or Asymmetric DSL (ADSL). The network interface 606 may also operate using alternative wired or even wireless access technologies comprising, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The customer-premises equipment 230 may be running the cybersecurity client 250.

In FIG. 6B, the customer-premises equipment 230 is a two-part apparatus. A WLAN router part 610 comprises the one or more memories 604A, the one or more processors 602A coupled to the one or more memories 604A configured to carry out the method/algorithm, and the wireless transceiver 600 to create the local area network 220 for enabling access by the network-connected device 200. A modem part 620 comprises the one or more processors 602B coupled to one or more memories 604B configured to carry out modem operations, and the network interface 606 to act as the modem configured to connect to the Internet 222. The WLAN router part 610 may be purchased by the user 206 of the network-connected device 200 to gain access to a part of the method/algorithm, whereas the modem part 620 may be provided by a carrier providing the telecommunication circuit access. As shown in FIG. 6B, the WLAN router part 610 and the modem part 620 may be communicatively coupled by an interface 626 (such as a wired Ethernet interface). As shown in FIG. 6B, the platform may be provided by the one or more memories 604A, and the one or more processors 602A, but also additionally, or alternatively, by the one or more memories 604B, and the one or more processors 602B. Instead of the cybersecurity client 250 another component running on the customer-premises equipment 230 may be configured to run a part of the algorithm implementing the method in some examples.

The customer-premises equipment 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the customer-premises equipment 230 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 250, and the cybersecurity server 254 in different configurations. In an example, the cybersecurity client 250 communicates 270 with the cybersecurity server 252 to implement the method/algorithm functionality.

Thus, the cybersecurity client 250 may in a stand-alone fashion carry out the method/algorithm, or a part of the method/algorithm functionality may be augmented by the functionality of the cybersecurity server 252. The cybersecurity client 250 may operate as a frontend with a relatively limited resources as regards to the processor and memory, whereas the cybersecurity server 252 may operate as a backend with a relatively unlimited resources as regards to the processor and memory, and the capability to serve a very large number of the network-connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
receiving (102) input data indicative of one or more network conditions, one or more application characteristics, and one or more available differentiation options;
generating (110), using a statistical model, for one or more evaluated differentiation options of the one or more available differentiation options, one or more probabilistic predictions of an application performance outcome for a network-connected device requesting a differentiation of network resources and one or more other application performance outcomes for one or more other network-connected devices sharing the network resources; and
in response to determining (118), based on the one or more probabilistic predictions, whether any of the evaluated differentiation options increases a likelihood of meeting an application performance objective for the network-connected device without causing unacceptable degradation in the one or more other application performance outcomes for the one or more other network-connected devices in accordance with network neutrality principles, outputting (124) a recommendation to apply a selected differentiation option for the network-connected device or to deny the differentiation of the network resources for the network-connected device.

2. The method of claim 1, wherein the input data is obtained (104) at the network-connected device, wherein the statistical model is configured to execute (112) locally on the network-connected device, and wherein a differentiation request for the network resources is generated (126) based on the recommendation.

3. The method of any preceding claim, wherein the input data indicative of the one or more network conditions comprises network performance metrics (106) for a first network segment between the network-connected device and a customer-premises equipment and a second network segment between the customer-premises equipment and a target network element, wherein the statistical model is configured to execute (114) locally on the customer-premises equipment, and wherein the statistical model is configured to estimate (116) end-to-end application performance for the network-connected device based on the network performance metrics of the first network segment and/or the second network segment.

4. The method of any preceding claim, wherein the input data indicative of the one or more network conditions comprises congestion level data (108).

5. The method of any preceding claim, wherein the statistical model is configured (132) to process the one or more evaluated differentiation options using a plurality of quality-of-service levels applicable to one or more of different application types and different network-connected device types, and generate the one or more probabilistic predictions for the plurality of quality-of-service levels.

6. The method of any preceding claim, wherein the statistical model is configured (134) to be trained using historical network performance data and periodically updated based on real-time network measurements.

7. The method of any preceding claim, wherein the statistical model is configured (136) to model large-value outliers in latency data of the one or more network conditions to assess a risk in the application performance outcome for the network-connected device.

8. The method of any preceding claim, wherein the statistical model is configured (138) to generate, for each of the one or more evaluated differentiation options, a latency distribution, a corresponding packet loss probability, and a probability value.

9. The method of any preceding claim, wherein the statistical model is configured (140) to estimate an end-to-end application performance for the network-connected device and for the one or more other network-connected devices, and wherein determining (118) comprises a cost-benefit analysis of a predicted impact of the differentiation of the network resources on all affected network traffic.

10. The method of any preceding claim, wherein the statistical model is configured (142) to estimate an aggregate impact of an evaluated differentiation option on a group of network-connected devices within a network sector.

11. The method of any preceding claim, wherein the statistical model is configured (144) to incorporate confidence intervals to account for unpredictable events comprising one or more of a mobility of the network-connected device, and an initiation of new network traffic by the one or more other network-connected devices.

12. The method of any preceding claim, wherein determining (118) further comprises:
evaluating (120), for each evaluated differentiation option, whether the corresponding probabilistic prediction of the application performance outcome for the network-connected device meets a predefined improvement condition; and
denying (122) the differentiation for the network-connected device if none of the one or more evaluated differentiation options meets the predefined improvement condition.

13. The method of any preceding claim, further comprising:
generating (128) a compliance report comprising, for each of the one or more evaluated differentiation options, a quantitative assessment of a predicted impact on the application performance outcome for the network-connected device and on the one or more application performance outcomes for the one or more other network-connected devices, wherein the compliance report comprises an indication of whether the predicted impact satisfies predefined criteria for transparency, proportionality, and non-discrimination in accordance with the network neutrality principles, and wherein the compliance report is configured to be transmitted to a network operator or a regulatory authority.

14. An apparatus comprising means for carrying out the method of any preceding claim 1-13.

15. A computer program comprising instructions which, when executed by an apparatus, cause the apparatus to carry out the method of any preceding claim 1-13.

16. A computer-readable medium comprising instructions which, when executed by an apparatus, cause the apparatus to carry out the method of any preceding claim 1-13.
